**Europäisches Patentamt**

**European Patent Office**

**Office européen des brevets**

(19)

(11) Veröffentlichungsnummer: **0 211 143**
**B1**

(12) # EUROPÄISCHE PATENTSCHRIFT

(45) Veröffentlichungstag der Patentschrift:
**26.10.88**

(51) Int. Cl.⁴: **B 65 G  21/20**

(21) Anmeldenummer: **86104691.0**

(22) Anmeldetag: **05.04.86**

(54) Formatschnellwechseleinrichtung an Transporteuren für Behälter.

(30) Priorität: **13.04.85  DE 3513232**

(43) Veröffentlichungstag der Anmeldung:
**25.02.87 Patentblatt 87/9**

(45) Bekanntmachung des Hinweises auf die Patenterteilung:
**26.10.88 Patentblatt 88/43**

(84) Benannte Vertragsstaaten:
**AT BE CH DE LI NL**

(56) Entgegenhaltungen:
**CH - A - 498 760**
**CH - A - 637 084**
**US - A - 3 527 336**

(73) Patentinhaber: **H&K Verpackungstechnik GmbH,
Niederste Feldweg 29, D-4600 Dortmund 1 (DE)**

(72) Erfinder: **Wiemann, Josef, Karlsruhe Strasse 15,
D-4600 Dortmund 1 (DE)**

## Beschreibung

Die Erfindung bezieht sich auf eine Formatschnellwechseleinrichtung an Transporteuren für Behälter wie Flaschen, Dosen, Einzelgebinden und dgl. mit oberhalb der eigentlichen Transportbahn angeordneten Bahnteilern für nebeneinander befindliche Einzelbahnen, wobei die Bahnteiler an Trägern gehalten und entsprechend der gewünschten Bahnbreite verstellbar gelagert sind.

Insbesondere bei Verpackungsmaschinen für Flaschen, Dosen, Mehrwegegebinden und dgl. sind Sammeltische erforderlich, die die umzusetzenden oder zu verpackenden Behälter in einer Bereitstellungsstation in der gewünschten Formation bevorraten. Zu diesem Zwecke sind oberhalb der Transportbänder oder eines dafür vorgesehenen Transporttisches Bahnteiler aus Leitblechen oder dgl. vorgesehen, mittels welcher die Behälter auf die erforderliche Seitenteilung verbracht werden. Zu diesem Zwecke sind die Bahnteiler oberhalb der Bewegungsbahn der Behälter an Trägern gehalten und mit diesen entsprechend dem geforderten Abstand verschraubt. Sobald nun ein anderes Gebinde verarbeitet werden soll, müssen derartige Bahnteiler gelöst und der neuen gewünschten Bahnbreite angepasst werden. Hierbei sind umfangreiche Handhabungsmassnahmen erforderlich, die sich insbesondere bei langgestreckten Zuführstationen mehrmals wiederholen können und insofern eine umfangreiche Umrüstzeit erfordern. Darüber hinaus ist aufgrund der beliebig auf den Trägern gegeneinander verschiebbaren Bahnteilern bei deren manueller Verstellung nicht immer eine exakte Bahnbreite gewährleistet.

Aus der CH-A-498 760 ist eine Führungsvorrichtung an einem horizontalen Förderband bekannt geworden. Diese zeichnet sich dadurch aus, dass sie auf mindestens einer Seite des Förderbandes angeordnete feste Stützmittel, mindestens eine quer über das Förderband sich erstreckende und in einem der Stützmittelgeber gelagerte Gewindestange und mindestens zwei Führungsplatten zur Führung der Gegenstände während ihrer Vorwärtsbewegung auf dem Förderband aufweist, wobei die Gewindestange auf der einen Hälfte mit einem Links- und auf der anderen Hälfte mit einem Rechtsgewindeteil versehen ist und zur seitlichen Verschiebung der Führungsplatten mittels der Gewindestange die Führungsplatten an Gewindemuttern befestigt sind, derart, dass die seitlichen Abstände zwischen den Führungsplatten durch Drehen der Gewindestange in der einen Richtung vergrössert, in der anderen Richtung verkleinert werden.

Mit dieser Vorrichtung können exakte Abstände der einzelnen Führungsbahnen erzeugt werden. Als nachteilig ist jedoch anzusehen, dass der hierzu erforderliche Aufwand relativ gross ist und die Vorrichtung aus einer Vielzahl von Einzelteilen besteht, die genauestens aufeinander abgestimmt sein müssen. Insbesondere bei der Montage einer solchen Vorrichtung ist ein erheblicher Zeitaufwand erforderlich.

Die Erfindung hat sich nun die Aufgabe gestellt, eine Formatschnellwechseleinrichtung zu schaffen, mit welcher in kürzester Zeit eine beliebige Umstellung auf unterschiedliche Bahnbreiten durch Verstellung der Bahnteiler möglich ist. Gleichzeitig soll dafür Sorge getragen werden, dass im Falle einer solchen Verstellung die Bahnteiler gleich exakt auf ihre neue Position fixiert sind, so dass gleichmässige Einzelbahnen vorliegen.

Zur Lösung dieser Aufgabe wird gemäss der vorliegenden Erfindung eine Formatschnellwechseleinrichtung an Transporteuren vorgeschlagen, die sich dadurch auszeichnet, dass die Bahnteiler mit Zentrierstangen innerhalb eines Trägers verschiebbar gelagert und in zur Verstellrichtung schräg verlaufenden Führungen einer Verstellachse zentriert sind, welche ihrerseits verdrehbar gegenüber der Trägerlängsachse um eine zentral angeordnete Achse derart gelagert ist, dass mit ihrer Verdrehung von der einen zur anderen Endlage die jeweilige Breitenfixierung der Einzelbahnen bzw. der zugeordneten Bahnteiler bewirkbar ist.

Dabei hat es sich als zweckmässig erwiesen, dass die Bahnteiler durch auf deren Zentrierstangen anbringbare Abstandshalter in ihrer jeweiligen Position fixierbar sind.

Schliesslich wird im Rahmen der Erfindung vorgeschlagen, dass die Abstandshalter aus einem Rohr mit in unterschiedlichen Winkellagen vorgesehenen Reihenbohrungen unterschiedlicher Teilung gebildet und auf die Zentrierstangen aufsteckbar sind.

Mit der vorgeschlagenen Ausgestaltung werden die eingangs genannten Forderungen vollauf erfüllt. Die Bahnteiler werden durch die Abstandshalter in ihrer jeweiligen Position, ohne dass Verschraubunden notwendig sind, gehalten. Dabei können die Abstandshalter auf einfache Weise mit den Zentrierstangen verbunden und auf diese aufgesteckt werden, so dass ein Verschieben nicht mehr möglich ist. Darüber hinaus bildet die Trägerlasche zwei oder mehrere Fixpunkte, so dass bei deren Verdrehung eine exakte Verschiebung aller Zentrierstangen mit den darunter befindlichen Bahnteilern in die gewünschte Position gegeben ist. Aufgrund dessen ist eine Umstellung auf andere Formate bzw. andere Bahnbreiten mit einfachen Mitteln innerhalb kürzester Zeit gewährleistet.

Im nachfolgenden wird die Erfindung anhand eines in der Zeichnung dargestellten Ausführungsbeispiels näher erläutert.

In der Zeichnung zeigt:
Fig. 1 eine Vorderansicht der Formatschnellwechseleinrichtung und
Fig. 2 eine vereinfachte Draufsicht dazu mit einer Verstellachse und
Fig. 3 eine Seitenansicht zu Fig. 1 mit teilweise im Schnitt dargestellten Vorrichtungsteilen.

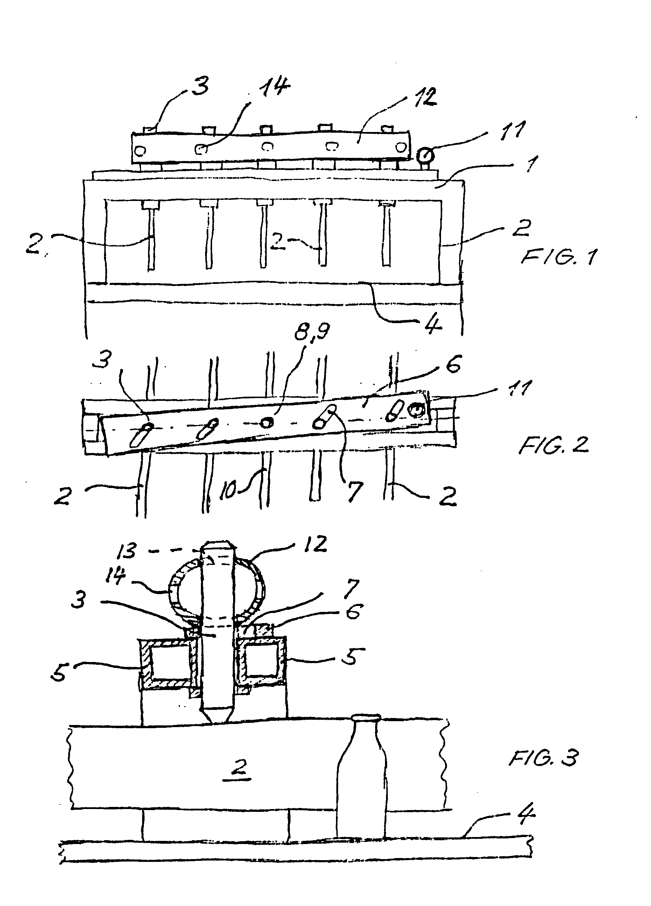

Die Formatschnellwechseleinrichtung besteht aus einem oberhalb der Bewegungsbahn bzw. Transportbahn der Behälter angeordneten Träger 1, an dem die Bahnteiler 2 bzw. deren Zentrierstangen 3 als Befestigungselemente gehalten sind. Wie insbesondere aus Fig. 3 ersichtlich, bestehen die Träger 1 aus zwei auf Abstand zueinander quer zur Bewegungsrichtung der Behälter oberhalb der Transportbahn 4 angeordneten Vierkantrohren 5, zwischen denen die Zentrierstangen 3 ebenfalls quer zur Bewegungsrichtung des Transportbandes 4 beliebig verschiebbar sind. Auf diesem Träger 1 ruht eine Verstellachse 6 mit mehreren schräg verlaufenden Führungen 7 zur Aufnahme der Zentrierstangen 3. Zweckmässig besteht dabei die mittlere Führung 8 lediglich aus einer Bohrung 9, die das Rotationszentrum für die Verstellachse 6 bildet. Dabei kann an dieser Stelle eine feste Arretierung für den entsprechend zugeordneten Bahnteiler 10 vorgesehen sein. Die Verstellachse 6 ist ferner mit einem zur besseren Handhabung vorgesehenen Handgriff 11 ausgestattet, der es ermöglicht, die Verstellachse 6 in der gewünschten Richtung zu verdrehen, wobei die äusseren Führungen 7, wie insbesondere aus Fig. 2 ersichtlich, automatisch auch eine Verschiebung der Zentrierstangen 3 innerhalb des zwischen beiden Vierkantrohren 5 gebildeten Zwischenraumes zulassen. Bei dem dargstellten Ausführungsbeispiel sind die Führungen 7 als Langlöcher ausgebildet und bewirken so die jeweiligen zwei Endlagen für die Bahnteiler 2. Es ist aber im Rahmen der Erfindung ohne weiteres möglich, die Führungen so auszubilden, dass verschiedene Zwischenstellungen mit entsprechender Abstandsbildung für die Bahnteiler 2 eingenommen werden.

Sobald nun, wie aus Fig. 2 ersichtlich, die jeweils gewünschte Endstellung durch Verdrehen der Verstellachse 6 erreicht wird, werden die Zentrierstangen 3 mit einem diese fixierenden Abstandshalter 12 versehen. Dieser besteht gemäss dem gewählten Ausführungsbeispiel aus einem Rohr, welches in Längsrichtung den gewünschten Abständen der Bahnteiler 2 entsprechend zugeordnete Reihenbohrungen 13 aufweist. Zweckmässig sind dabei am Umfang des Rohres in unterschiedlicher Winkellage mehrere Reihenbohrungen 13, 14 vorgesehen, die untereinander in ihrer Reihe eine gleiche Teilung, jedoch zueinander versetzt jeweils unterschiedliche Einzelteilungen aufweisen, so dass mit Vedrehen des Rohres jeweils die eine oder andere Bahnteiler-Abstandsfixierung vorgenommen werden kann.

**Patentansprüche**

1. Formatschnellwechseleinrichtung an Transporteuren für Behälter wie Flaschen, Dosen, Einzelgebinden und dgl. mit oberhalb der eigentlichen Transportbahn (4) angeordneten Bahnteilern (2) für nebeneinander befindliche Einzelbahnen, wobei die Bahnteiler (2) an Trägern (1) gehalten und in der gewünschten Bahnbreite verstellbar gelagert sind, dadurch gekennzeichnet, dass die Bahnteiler (2) mit Zentrierstangen (3) innerhalb eines Trägers (1) verschiebbar gelagert und in zur Verstellrichtung schrägverlaufenden Führungen (7) einer Verstellachse (6) zentriert sind, welche ihrerseits verdrehbar gegenüber der Trägerlängsachse um eine zentral angeordnete Achse (8, 9) derart gelagert ist, dass mit ihrer Verdrehung von der einen zur anderen Endlage die jeweilige Breitenfixierung der Einzelbahnen bzw. der zugeordneten Bahnteiler (2) bewirkbar ist.

2. Formatschnellwechseleinrichtung nach Anspruch 1, dadurch gekennzeichnet, dass die Bahnteiler (2) durch auf deren Zentrierstangen (3) anbringbare Abstandshalter (12) in ihrer jeweiligen Position fixierbar sind.

3. Formatschnellwechseleinrichtung nach Anspruch 1, dadurch gekennzeichnet, dass die Abstandshalter (12) aus einem Rohr mit in unterschiedlichen Winkellagen vorgesehenen Reihenbohrungen (13, 14) unterschiedlicher Teilung gebildet und auf die Zentrierstangen (3) aufsteckbar sind.

**Claims**

1. Quick-changing means for changing the format of conveyors for containers such as botties, cans, individual packages and the like, having path dividers (2), disposed above the actual conveyor belt (4), for dividing individual paths disposed adjacent one another, the path dividers (2) being retained on supporting members (1) and being adjustably mounted in the desired path width, characterised in that the path dividers (2), with centering rods (3), are displaceably mounted inside a supporting member (1) and are centred in guides (7) of an adjusting axle (6), which guides extend inclinedly relative to the adjusting relation, the adjusting axle, in turn, being pivotably mounted relative to the longitudinal axle of the supporting member about a centrally disposed axis (8, 9) in such a manner that the fixing of the particular widths of the individual paths, or that is to say, of the associated path dividers (2), can be achieved with its pivotal movement from one end position to the other.

2. Format quick-changing means according to Claim 1, characterised in that the path dividers (2) can be fixed in their particular position by means of spacer members (12) which are attachable to the centering rods (3) of said dividers.

3. Format quick-changing means according to Claim 1, characterised in that the spacer members (12) are formed from a tube having series bores (13, 14) with different spacings therebetween, which are provided at different angular positions, and the spacer members are attachable to the centering rods (3).

**Revendications**

1. Dispositif de changement rapide de format sur des convoyeurs pour des récipients comme des bouteilles, des boîtes, des emballages à un seul usage, et analogues avec, au-dessus de la voie de transport proprement dite (4), des séparateurs de voies (2) pour des voies distinctes disposées côte à côte, dans lequel les séparateurs de voies (2) sont retenus et disposés de manière ajustable, à la largeur de voie souhaitée, sur des supports (1), caractérisé en ce que, par l'intermédiaire de tiges de centrage (3), les séparateurs de voies (2) sont disposés de manière mobile dans un support (1), et sont centrés dans des guides (7), obliques par rapport à la direction de déplacement d'un axe de commande (6) lequel est disposé à pivotement autour d'un axe central (8, 9), par rapport à l'axe longitudinal du support, de telle sorte que la largeur correspondante des diverses voies, respectivement des séparateurs de voies associés (2), peut être ajustée par son pivotement d'une position terminale à l'autre.

2. Dispositif selon la revendication 1, caractérisé en ce que les séparateurs de voies (2) peuvent être fixés dans leur position appropriée par des éléments d'écartement (12) solidarisables de leurs tiges de centrage (3).

3. Dispositif selon la revendication 1, caractérisé en ce que les éléments d'écartement (12) sont formés d'un tube percé d'alésages alignés (13, 14), disposés dans diverses positions relatives pour diverses séparations, et se fixent sur les tiges de centrage (3).

FIG. 1

FIG. 2

FIG. 3